# EUROPEAN PATENT APPLICATION

(11) **EP 4 794 160 A1**
(43) Date of publication of application: **19.08.2026**
(21) Application number: 24876885.5
(22) Date of filing: 01.05.2024
(51) Int. Cl.: H02J 7/00, H02J 1/00, H02J 7/34

(54) **POWER CONVERTER AND POWER SYSTEM USING POWER CONVERTER**

(30) Priority: 12.10.2023 JP 2023177028
(71) Applicant: Hitachi Industrial Equipment Systems Co., Ltd., Tokyo 101-0021 (JP)
(72) Inventor: TAKEDA, Kenji, Tokyo 101-0021 (JP); TAKANO, Yuuri, Tokyo 101-0021 (JP); UEI, Yusuke, Tokyo 101-0021 (JP); KONDO, Terutomo, Tokyo 101-0021 (JP)
(74) Representative: MERH-IP Matias Erny Reichl Hoffmann Patentanwälte PartG mbB
(86) International application number: PCT/JP2024/016805
(87) International publication number: WO 2025/079283

(57) **Abstract**

A power system capable of readily coping with changes in a system configuration and a power converter used in the power system are provided. Here, the power system includes a DC device (1), a DC power supply bus 4 configured to supply power to the DC device, a power converter (2) capable of charging and discharging power to and from the DC power supply bus 4, a supervisory control device configured to control the DC device, and an Ethernet line 7 configured to connect the DC device, the power converter, and the supervisory control device. The power converter receives a communication message including DC-device-related information which is information related to the DC device via the Ethernet line 7, acquires the DC-device-related information from the communication message, and charges and discharges the DC power supply bus 4 based on the acquired DC-device-related information.

## Description

### TECHNICAL FIELD

The present invention relates to a power converter and a power system using a power converter, for example, a power system used for supplying DC power to an electromechanical system including a motor and the like.

### BACKGROUND ART

Patent Document 1 discloses a DC power supply system including a natural energy power generator, a load device, and a storage battery, each of which is connected to a DC bus through a DC/DC converter, and a power management device. The storage battery performs charging of generated power and discharging to the load device based on a magnitude relationship between generated power and load power. The power management device manages operations of each DC/DC converter based on power generation amount, load power amount, and the like.

Patent Document 1: International Patent Application Publication No. WO 2020/161765

### SUMMARY OF THE INVENTION

### PROBLEMS TO BE SOLVED BY THE INVENTION

In recent years, as one measure against global warming, the utilization of renewable energy has attracted attention. In a DC power supply system, particularly with respect to power transmission of renewable energy generated by solar power generation or power transmission of DC devices such as storage batteries, the number of stages of power conversion can be reduced as compared with AC power supply. Therefore, such a DC power supply system has an advantage of low power loss. In realizing such a DC power supply system, management of power flow in a DC power supply bus generally becomes an important technical issue.

For example, when a motor drive inverter is assumed as a DC load, it is expected not only to manage power consumption during a motoring operation of a motor but also to reuse, on the DC power supply bus, regenerative power generated during deceleration of the motor. Even with such power flowing into and out of the DC power supply bus, the voltage of the DC power supply bus is required to be maintained within an appropriate range without reaching an overvoltage or an undervoltage.

Under such circumstances, for example, Patent Document 1 discloses a method for operating and managing the DC power supply and storage battery in a system including a group of converters connected to a DC power supply bus and a power management device that centrally controls the converters. In this method, in a system to which various DC devices are connected, individual power of respective devices is centrally managed by the power management device.

However, in such a method, when a system configuration is changed by, for example, introduction of a new DC device, it becomes necessary to reestablish an operational policy of the power management device and to perform modification work required for communication with the power management device. As a result, a trial period for various adjustments may be prolonged and required effort may increase, which sometimes makes it difficult to readily cope with changes in the system configuration.

The present invention has been made in view of the issues mentioned above, and one of objects thereof is to provide a power system capable of readily coping with changes in system configuration and a power converter used in the power system.

The above and other objects and novel features of the present invention will be apparent from the descriptions of this specification and accompanying drawings.

### MEANS FOR SOLVING THE PROBLEMS

A power system according to one embodiment includes at least one DC devices, a DC power supply bus configured to supply power to the DC device, a power converter capable of charging and discharging power to and from the DC power supply bus, a supervisory control device configured to control the DC device, and an Ethernet line (registered trademark) configured to connect the DC device, the power converter, and the supervisory control device. The power converter receives a communication message including DC-device-related information which is information related to the DC device via the Ethernet line, acquires the DC-device-related information from the communication message, and charges and discharges the DC power supply bus based on the acquired DC-device-related information.

### EFFECTS OF THE INVENTION

According to the embodiment above, it is possible to realize a power system capable of readily coping with changes in system configuration.

### BRIEF DESCRIPTION OF THE DRAWINGS

[FIG. 1] is a schematic diagram illustrating a configuration example of a power system according to the first embodiment.
[FIG. 2] is a block diagram illustrating a detailed configuration example of an inverter in FIG. 1.
[FIG. 3A] is a block diagram illustrating a detailed configuration example of a DC/DC converter in FIG. 1.
[FIG. 3B] is a block diagram illustrating a detailed configuration example of a communication controller in FIG. 3A.
[FIG. 4] is a sequence diagram illustrating a schematic operation example of the power system illustrated in FIG. 1.
[FIG. 5A] is a schematic diagram for describing an example of processing contents using a communication message transmitted in the operation in FIG. 4.
[FIG. 5B] is a schematic diagram for describing an example of processing contents using the communication message transmitted in the operation in FIG. 4.
[FIG. 5C] is a schematic diagram for describing an example of processing contents using the communication message transmitted in the operation in FIG. 4.
[FIG. 6] is a diagram illustrating an example of processing contents of a user interface and an example of display contents in a parameter setting unit.
[FIG. 7A] is a diagram for schematically describing an operation example based on a charge/discharge algorithm assuming inverter operation patterns in a control command value generation unit illustrated in FIG. 3B.
[FIG. 7B] is a flowchart illustrating an example of main processing contents performed in FIG. 7A by the communication controller illustrated in FIG. 3B.
[FIG. 8A] is a diagram for schematically describing another operation example based on a charge/discharge algorithm assuming inverter operation patterns in the control command value generation unit illustrated in FIG. 3B.
[FIG. 8B] is a flowchart illustrating an example of main processing contents performed in FIG. 8A by the communication controller illustrated in FIG. 3B.
[FIG. 9A] is a diagram for schematically describing still another operation example based on a charge/discharge algorithm assuming inverter operation patterns in the control command value generation unit illustrated in FIG. 3B.
[FIG. 9B] is a flowchart illustrating an example of main processing contents performed in FIG. 9A by the communication controller illustrated in FIG. 3B.
[FIG. 10] is a schematic diagram illustrating a configuration example of a power system according to the second embodiment.

### DETAILED DESCRIPTION OF PREFERRED EMBODIMENTS

Hereinafter, embodiments of the present invention will be described in detail with reference to the drawings. The embodiments are examples provided for describing the present invention, and omissions and simplifications have been made as appropriate for clarity of description. The present invention can be implemented in various other forms. Unless otherwise specified, each component may be singular or plural. The positions, sizes, shapes, ranges, and the like of the respective components illustrated in the drawings may not represent actual positions, sizes, shapes, ranges, and the like in order to make the invention easily understood. Accordingly, the present invention is not necessarily limited to the positions, sizes, shapes, ranges, and the like disclosed in the drawings.

As examples of various types of information, expressions such as "table", "list", and "queue" may be used for description, but such information may be represented using data structures other than these. For example, various types of information such as "XX table", "XX list", and "XX queue" may be referred to as "XX information." When describing identification information, expressions such as "identification information", "identifier", "name", "ID", and "number" may be used, and these expressions are interchangeable.

In addition, when there are multiple components having the same or similar function, such components may be denoted by the same reference numeral with different suffixes. For example, a certain component may be denoted by a reference numeral "1", and multiple components having the same or similar function may be distinguished as "1A", "1B", and the like. When it is not necessary to distinguish among such multiple components, the suffixes may be omitted in the description.

In the embodiments, there are cases in which processing performed by executing a program is described. As one example, a computer executes a program by a processor (for example, CPU or GPU) and performs processing defined by the program while using storage resources (for example, memory) and interface devices (for example, communication port). Accordingly, the subject of processing performed by executing a program may be a processor. In addition, the subject of processing performed by executing a program may be a controller, a device, a system, a computer, or a node having a processor.

Furthermore, the subject of processing performed by executing a program may be a computing unit, and may include a dedicated circuit for performing specific processing. Here, the dedicated circuit refers to, for example, a field programmable gate array (FPGA), an application specific integrated circuit (ASIC), a complex programmable logic device (CPLD), and the like.

Programs may be installed on a computer from program sources. The program sources may include a program distribution server or a computer-readable storage medium. When the program source is a program distribution server, the program distribution server may include a processor and a storage resource that stores a program to be distributed, and the processor of the program distribution server may distribute the program to be distributed to another computer. In addition, in the embodiments, two or more programs may be implemented as a single program, or a single program may be implemented as two or more programs.

### (First Embodiment)

### <Configuration of Power System>

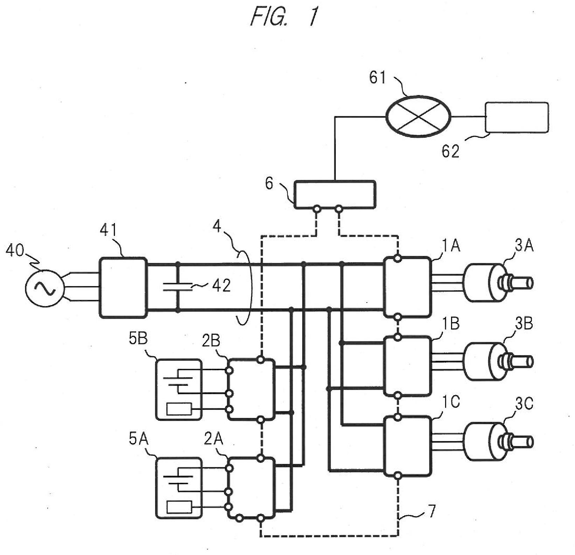

FIG. 1 is a schematic diagram illustrating a configuration example of a power system according to the first embodiment. In FIG. 1, the power system is constituted of portions excluding motors 3A, 3B, and 3C. Inverters 1A, 1B, and 1C are examples of DC devices. DC inputs of the respective inverters 1A, 1B, and 1C are connected in parallel to a common DC power supply bus 4. Accordingly, the DC power supply bus 4 supplies DC power to each of the inverters 1A, 1B, and 1C.

In addition, a power grid 40 is connected to the DC power supply bus 4 via an AC/DC converter 41. Furthermore, a DC capacitor 42 for storing power of the DC power supply bus 4 is connected to the DC power supply bus 4. The DC capacitor 42 may be mounted, for example, inside the AC/DC converter 41 or the inverters 1A, 1B, and 1C.

The AC/DC converter 41 converts AC power from the power grid 40 into DC power and supplies the DC power to the DC power supply bus 4. Further, the AC/DC converter 41 may convert DC power from the DC power supply bus 4 into AC power and supply the AC power to the power grid 40. The AC/DC converter 41 may be constituted of, for example, a rectifier using a diode or a thyristor or a bidirectional grid-connected inverter using an insulated gate bipolar transistor (IGBT), a field effect transistor (FET), or the like.

For example, the motors 3A, 3B, and 3C are connected to AC outputs of the inverters 1A, 1B, and 1C, respectively. The inverters 1A, 1B, and 1C convert DC power from the DC power supply bus 4 into AC power to rotationally drive the motors 3A, 3B, and 3C. In this manner, an electromechanical system is constructed by the motors 3A, 3B, and 3C and the power system that drives the motors. In the motors 3A, 3B, and 3C, regenerative power may be generated, for example, during deceleration. A part of such regenerative power may be stored in the system by charging the DC capacitor 42 and may be reused in a subsequent motoring operation.

Here, since the DC capacitor 42 has finite capacitance, when the capacitance is insufficient with respect to the regenerative power, a storage battery 5 for absorbing the regenerative power may be additionally connected to the DC power supply bus 4. In this case, in order to control charging and discharging of the storage battery 5, it is desirable to provide a DC/DC converter 2 capable of bidirectional charging and discharging operations as illustrated in FIG. 1.

DC/DC converters 2A and 2B are examples of power converters and are configured to be able to charge and discharge power to and from the DC power supply bus 4. One ends of the DC/DC converters 2A and 2B are connected in parallel to the DC power supply bus 4, and the other ends are connected to storage batteries 5A and 5B, respectively. Accordingly, the DC/DC converters 2A and 2B charge and discharge a part of energy of the DC power supply bus 4 to and from the storage batteries 5A and 5B.

The storage batteries 5A and 5B and the DC/DC converters 2A and 2B are preferably connected not only by positive and negative power lines of the storage batteries 5A and 5B but also by control lines for communication and operation. For example, in lithium-ion batteries and the like, it is common to incorporate a storage battery controller for the purpose of managing cell voltages, temperatures, and the like inside the storage batteries. In this case, the DC/DC converters 2A and 2B receive safety-related information of the lithium-ion batteries detected by the storage battery controller via control lines. Then, protection circuits or the like provided in the DC/DC converter 2 protect the storage battery 5 by, for example, stopping charging and discharging when an emergency condition is detected based on the safety-related information.

Note that the storage batteries 5A and 5B may be used for the purpose of not only assisting the DC capacitor 42 but also backing up the power supply. That is, the storage batteries 5A and 5B supply power to the DC power supply bus 4 such that the inverters 1A, 1B, and 1C can continue normal operation in the event of abnormality in the power grid 40 or the like. As the storage batteries 5, various types of storage devices including capacitors adopting electric double-layer technology, nickel-metal hydride batteries, and lead-acid batteries can be applied other than lithium-ion batteries.

Here, as an example of the electromechanical system illustrated in FIG. 1, a system such as a factory production line or machine tool that simultaneously uses multiple motor drives is assumed. In such a case, the inverters that drive the motors generally have configurations to receive commands from an external supervisory control device via communication so as to perform desired operations. Accordingly, the inverters 1A, 1B, and 1C each have a communication port and are connected to an external communication master 6 via wired or wireless communication.

For example, the wired communication may comply with standard specifications such as RS-485, CAN, or Ethernet. Among them, in particular, each of the inverters 1A, 1B, and 1C in FIG. 1 has two or more Ethernet ports and is connected in series via a daisy-chain Ethernet line 7. EtherCAT (registered trademark) is known as an industrial communication standard that employs such a configuration.

In EtherCAT, the communication master 6 transmits a group of frames collectively including commands for all slaves, that is, a communication message. The communication master 6 is a part of a supervisory control device. On the other hand, each slave (here, the inverters) reads out, in an on-the-fly manner, only a part of the collective command corresponding to its own station number from the passing message, and further writes necessary information, also in an on-the-fly manner, into a part of the region corresponding to its own station number. By this method, EtherCAT achieves high-speed communication by eliminating handshake processing between the master and the slaves, and also realizes synchronous operation of a large number of slaves by managing the transmission and reception timing of the collective commands.

In FIG. 1, the Ethernet line 7 is connected starting from the communication master 6, sequentially passing through the inverters 1A, 1B, and 1C, and further sequentially passing through the DC/DC converters 2A and 2B. Thereafter, a loop-type connection configuration in which the DC/DC converter 2B is connected to the communication master 6 may be used, or a turnaround-type connection configuration in which communication is returned back at the DC/DC converter 2B may be used.

Note that the communication master 6 is constituted of, for example, a programmable logic controller having computing functions. Furthermore, the communication master 6 may be configured to be connected to a computing device 62 such as a server via a wide-area communication network 61 so as to be able to exchange operation software for the electromechanical system and the like with the computing device 62.

As described above, in FIG. 1, the daisy-chain Ethernet line 7 is provided, and the DC/DC converters 2A and 2B which are power converters are connected downstream of the inverters 1A, 1B, and 1C which are DC devices. As a result, the power converters located downstream can directly refer, within a frame cycle, to information written by the DC devices located upstream, for example, DC-device-related information regarding rotation control of the motors 3. That is, the power converters can directly acquire information regarding the DC devices connected to the DC power supply bus 4 and charge and discharge the DC power supply bus 4 based on the acquired information, without passing through a power management device that performs centralized management as in conventional systems.

As a result, the power converters can detect states of the DC devices and the like with minimal time delay, and can promptly respond according to the states of the DC devices, that is, perform charging and discharging. This improves the responsiveness of the power converters in the power system. Furthermore, for example, when DC devices or storage batteries are to be added to or removed from the DC power supply bus 4, that is, when the system configuration of the power system is changed, modification of the power management device is not required. Accordingly, it is possible to suppress prolongation of trial periods and increase in required effort associated with such a modification, and to readily cope with changes in the system configuration.

### <Details of Inverter (DC Device)>

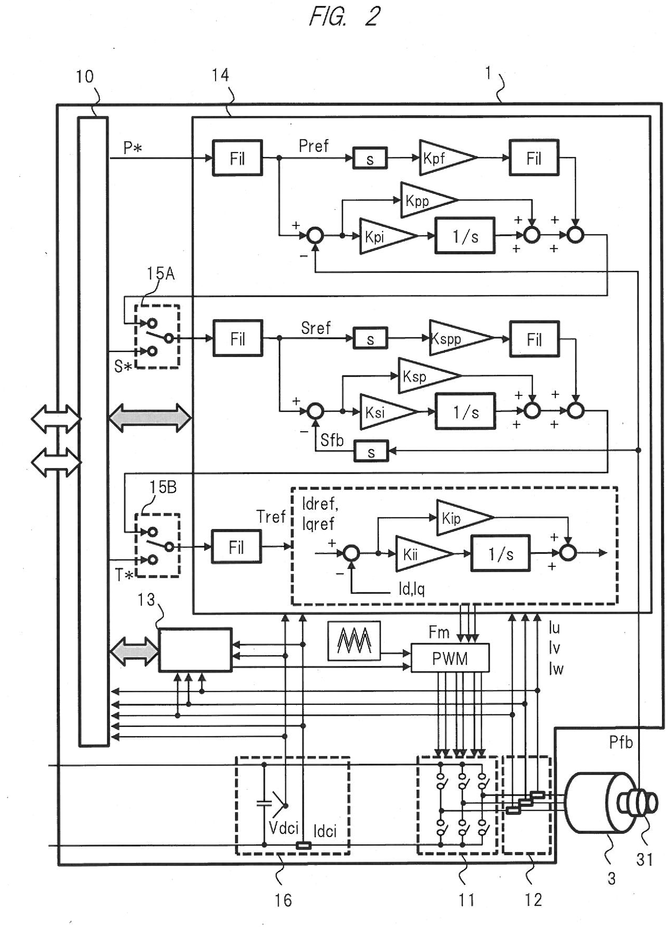

FIG. 2 is a block diagram illustrating a detailed configuration example of the inverter 1 in FIG. 1. A main circuit of the inverter 1 is constituted of an inverter conversion circuit 11 which is a power conversion circuit, a motor-side sensor 12 provided on an AC side of the inverter conversion circuit 11, and a DC-bus-side sensor 16 provided on a DC side. The inverter conversion circuit 11 includes a plurality of switching elements which are power semiconductor elements, and mutually converts DC power and AC power by switching of the plurality of switching elements.

A communication controller 10 receives and interprets a group of frames (communication message) transmitted from the communication master 6 in FIG. 1 via the Ethernet line 7. Then, the communication controller 10 acquires, from the group of frames, values such as a position command value P*, a speed command value S*, and a torque command value T* that are required for motor rotation control, and outputs these control command values to a motor rotation control unit 14.

On the other hand, a state monitor 13 receives inputs of motor currents Iu, Iv, and Iw detected by the motor-side sensor 12, a DC bus voltage Vdci and a DC bus current Idci detected by the DC-bus-side sensor 16, and the like. Then, the state monitor 13 acquires the input information or computation results based thereon as sensor information. As one example, the state monitor 13 can acquire, as sensor information, DC bus power obtained by computing the DC bus voltage Vdci and the DC bus current Idci.

The communication controller 10 receives inputs of the sensor information acquired by the state monitor 13 and computation information relating to motor rotation control generated in the motor rotation control unit 14. Then, the communication controller 10 writes the input information into the group of frames (communication message) as DC-device-related information, thereby transmitting the information to the outside. As a result, the inverter 1 arranged upstream on the Ethernet line 7 can transmit its own inverter state to devices arranged downstream.

The motor rotation control unit 14 mainly controls rotation of the motor 3 by controlling switching in the inverter conversion circuit 11 based on a deviation between the control command values and actual detection values. Various control methods are known for use in the motor rotation control unit 14. FIG. 2 illustrates a configuration example of the motor rotation control unit 14 that executes three-stage loop control of position, speed, and torque, which is a typical control method.

In the motor control unit 14, a position control block on the initial stage converts the position command value P* into a motor position command value Pref through predetermined filter processing. The position control block calculates a position deviation amount, which is a deviation between the motor position command value Pref and position information Pfb detected by a position detector 31 provided on a motor shaft. Then, the position control block computes an operation amount corresponding to a speed command value of the next stage by proportional-integral control using position control gains Kpp and Kpi such that the position deviation amount approaches zero.

A speed control block on the next stage selects, using a control command switching unit 15A, either the speed command value obtained by the position control block or the speed command value S* from the communication controller 10, and converts the selected value into a motor speed command value Sref through predetermined filter processing. Also, the speed control block calculates a speed deviation amount, which is a deviation between the motor speed command value Sref and a speed detection value Sfb estimated by differentiating the position information Pfb. Then, the speed control block computes an operation amount corresponding to a torque command value of the final stage by proportional-integral control using speed control gains Ksp and Ksi such that the speed deviation amount approaches zero.

A torque control block on the final stage selects, using a control command switching unit 15B, either the torque command value obtained by the speed control block or the torque command value T* from the communication controller 10, and converts the selected value into a motor torque command value Tref and DQ-axis current command values Idref and Iqref through predetermined filter processing. Also, the torque control block calculates current deviation amounts, which are deviations between the DQ-axis current command values Idref and Iqref and DQ-axis current detection values Id and Iq estimated from the motor currents Iu, Iv, and Iw. Then, the torque control block computes an operation amount of the next stage by proportional-integral control using current control gains Kip and Kii such that each of the current deviation amounts approaches zero.

The operation amount obtained by the torque control block is converted into three-phase modulation waves Fm based on a predetermined phase estimated from the motor currents Iu, Iv, and Iw or the position information Pfb. A pulse width modulator PWM generates pulse commands by comparing the three-phase modulation waves Fm with a carrier wave such as a triangular wave. The inverter conversion circuit 11 performs switching by turning on and off internal switching elements based on the pulse commands. As a result, the motor currents Iu, Iv, and Iw are generated, driving force is applied to the motor shaft, and the value of the position detector 31 changes, thereby forming a series of feedback control system.

In the inverter 1 illustrated in FIG. 2, portions of the control circuit other than the main circuit (11, 12, 16) described above may be implemented by, for example, internal circuits mounted on a microcontroller or an FPGA. As a specific example, the communication controller 10 may be implemented by a communication interface circuit compliant with EtherCAT. The pulse width modulator PWM may be implemented by a dedicated circuit or a timer circuit. The state monitor 13 may be implemented by an analog-to-digital converter or the like. The motor rotation control unit 14 and the control command switching units 15A and 15B may be implemented by, for example, a processor executing a program stored in a memory.

However, the implementation form of the control circuit is not limited to this, and may be hardware, software, or a combination thereof. In addition, each of the position control, speed control, and torque control blocks in the motor rotation control unit 14 is not limited to proportional-integral control (PI control), and proportional-integral-derivative control (PID control) may also be employed. In the example illustrated in FIG. 2, PID control is used in the position control and the speed control.

### <Details of DC/DC Converter (Power Converter)>

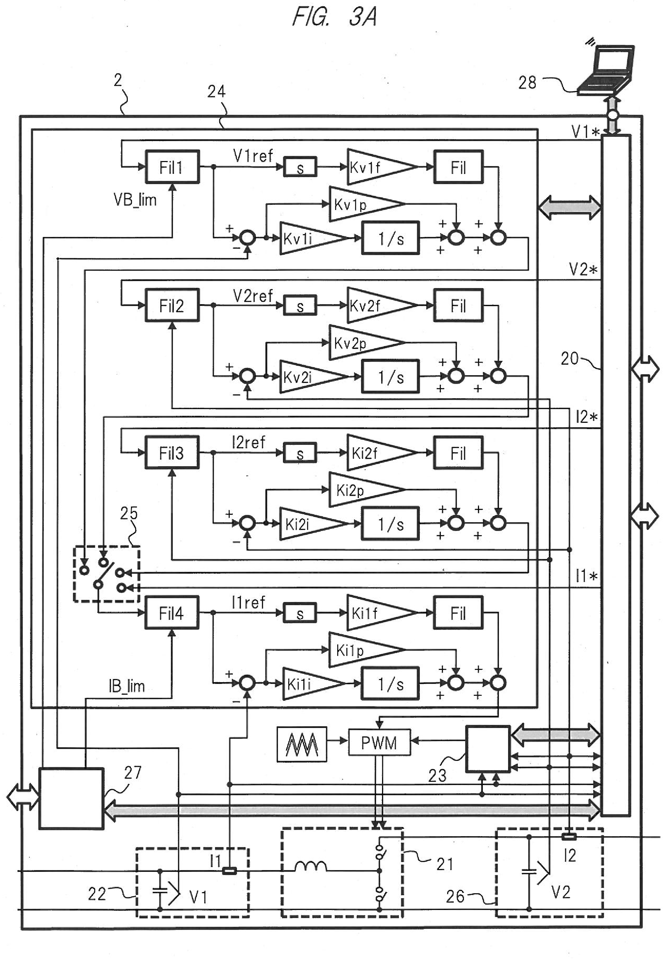

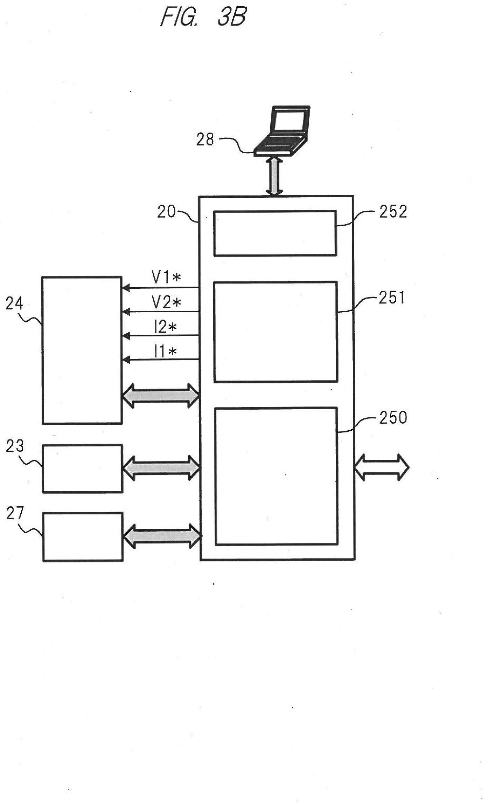

FIG. 3A is a block diagram illustrating a detailed configuration example of the DC/DC converter 2 in FIG. 1. FIG. 3B is a block diagram illustrating a detailed configuration example of a communication controller 20 in FIG. 3A. In FIG. 3A, a main circuit of the DC/DC converter 2 is constituted of a converter conversion circuit 21 which is a power conversion circuit, a battery-side sensor 22 provided on a side of the battery of the converter conversion circuit 21, and a DC-bus-side sensor 26 provided on a side of the DC power supply bus 4.

The converter conversion circuit 21 includes an inductor that stores electric power and a plurality of switching elements for charging and discharging which are power semiconductor elements, and controls charging and discharging of the DC power supply bus 4 and discharging and charging of the storage battery 5 by switching of the plurality of switching elements. Also, in FIG. 3A, in the example in which the storage battery 5 incorporates a storage battery controller, a storage battery communication unit 27 is provided. The storage battery communication unit 27 acquires state information of the storage battery 5 from the storage battery controller.

As illustrated in FIG. 3B, the communication controller 20 includes an information acquisition circuit 250, a control command value generation unit 251, and a user interface 252. The information acquisition circuit 250 receives and interprets a group of frames (communication message) which are transmitted from the communication master 6 via the Ethernet line 7, and in which DC-device-related information has been written by at least one DC devices, that is, one or more inverters 1. Then, the information acquisition circuit 250 acquires the DC-device-related information from the communication message, for example, information related to motor rotation control.

The control command value generation unit 251 receives an input of the acquired DC-device-related information, and generates control command values such as a battery-side voltage command value V1*, a DC-bus-side voltage command value V2*, a DC-bus-side current command value I2*, and a battery-side current command value I1* based on a predetermined charge/discharge algorithm. The control command value generation unit 251 outputs the generated control command values to a charge/discharge control unit 24. As a result, the charge/discharge control unit 24 controls the converter conversion circuit 21 in FIG. 3A based on the control command values, thereby performing charging and discharging of the DC power supply bus 4 and discharging and charging of the storage battery 5.

On the other hand, as illustrated in FIG. 3A, a state monitor 23 receives inputs of a battery voltage V1 and a battery current I1 detected by the motor-side sensor 22, a DC bus voltage V2 and a DC bus current I2 detected by the DC-bus-side sensor 26, and the like. Then, the state monitor 23 acquires the input information or computation results based thereon as sensor information.

The information acquisition circuit 250 receives inputs of the sensor information acquired by the state monitor 23, computation information relating to charge/discharge control generated in the charge/discharge control unit 24, and the state information of the storage battery 5 from the storage battery control unit 27. Then, the information acquisition circuit 250 writes the input information into the communication message as power conversion operation information, thereby transmitting the information to the outside. For example, when a charge/discharge power of the DC/DC converter, a state of charge (SOC) of the storage battery acquired from the storage battery controller, and the like are written as the power conversion operation information, a downstream device, for example, another DC/DC converter can refer to such information.

The user interface 252 receives an operation input from a user and provides various types of information to the user. As one function thereof, the user interface 252 communicates with a parameter setting unit 28 and acquires parameters set by a user using the parameter setting unit 28. The control command value generation unit 251 performs computation based on the charge/discharge algorithm, using parameters from the user interface 252 in addition to the DC-device-related information from the information acquisition circuit 250, thereby generating the control command value or adjusting the control command value based on the parameters.

In FIG. 3A, various methods are known for a circuit configuration of the converter conversion circuit 21 and a control method used in the charge/discharge control unit 24. As representative examples thereof, FIG. 3A illustrates the converter conversion circuit 21 constituted of a bidirectional chopper circuit and the charge/discharge control unit 24 configured to execute two-stage loop control of voltage and current. In the bidirectional chopper circuit, for example, it is possible to perform a step-up operation in which electric power from the storage battery 5 is stored in an inductor and then supplied to the DC power supply bus 4 and a step-down operation in which electric power from the DC power supply bus 4 is stored in an inductor and then commutated on the side of the storage battery 5, thereby charging the storage battery 5.

As another representative circuit configuration except for the bidirectional chopper circuit in the converter conversion circuit 21, for example, a double active bridge circuit in which bridge-type switching circuits are provided respectively on an input and an output of a high-frequency transformer is also known. The bidirectional charging/discharging operation can be performed even in the converter conversion circuit 21 constituted of such a double active bridge circuit.

On an initial stage of the charge/discharge control unit 24, a control block to control any one of the battery voltage V1, the DC bus voltage V2, and the DC bus current I2 is provided. The control block on the initial stage converts the battery-side voltage command value V1* into a voltage command value V1ref by a predetermined filter Fill, and calculates a deviation between the voltage command value V1ref and the battery voltage V1. Then, the control block on the initial stage computes an operation amount corresponding to a current command value of a next stage by proportional-integral control using control gains Kv1p and Kvli such that the deviation approaches zero.

Alternatively, the control block on the initial stage converts the DC-bus-side voltage command value V2* into a voltage command value V2ref by a predetermined filter Fil2, and calculates a deviation between the voltage command value V2ref and the DC bus voltage V2. Then, the control block on the initial stage computes an operation amount corresponding to a current command value of a next stage by proportional-integral control using control gains Kv2p and Kv2i such that the deviation approaches zero.

Alternatively, the control block on the initial stage converts the DC-bus-side current command value I2* into a current command value 12ref by a predetermined filter Fil3, and calculates a deviation between the current command value 12ref and the DC bus current I2. Then, the control block on the initial stage computes an operation amount corresponding to a current command value of a next stage by proportional-integral control using control gains Ki2p and Ki2i such that the deviation approaches zero.

On a final stage of the charge/discharge control unit 24, a current control block to control the battery current I1 is provided. The current control block on the final stage selects any of the three current command values obtained in the three control blocks on the initial stage and the current command value I1* from the communication controller 20, using a control command switching unit 25. Furthermore, the current control block on the final stage converts the selected current command value into a current command value Ilref by a predetermined filter Fil4, and calculates a current deviation amount which is a deviation between the current command value Ilref and the battery current I1.

Then, the current control block on the final stage computes an operation amount of the next stage by proportional-integral control using control gains Kilp and Ki1i such that the current deviation amount approaches zero. The operation amount is then converted into a modulation wave and input to the pulse width modulator PWM. The pulse width modulator PWM generates pulse commands by comparing the input modulation wave with a carrier wave such as a triangular wave. The converter conversion circuit 21 performs switching by turning on and off internal switching elements based on the pulse commands. As a result, the battery current I1 is generated, and the value of the battery voltage V1 or the DC bus voltage V2 changes in accordance with the battery current I1, thereby forming a series of feedback control system.

Note that, as in the case of FIG. 2, proportional-integral-derivative control (PID control) may also be applied to each control block in the charge/discharge control unit 24 instead of proportional-integral control (PI control). In addition, the filter Fill that outputs the battery-side voltage command value V1ref may refer to, for example, an upper/lower limit voltage VB_lim of the storage battery 5 acquired by the storage battery communication unit 27, thereby correcting the voltage command value V1ref so as to fall within an upper and lower allowable voltage range. In particular, in lithium-ion batteries and the like, since electrode reactions leading to irreversible degradation may occur under overvoltage conditions, preventing such reactions is effective for ensuring safety and extending the service life of the storage battery 5.

Also, the filter Fil2 that outputs the DC-bus-side voltage command value V2ref may correct the DC-bus-side voltage command value V2ref such that the DC bus voltage V2 droops, for example, when the DC bus current I2 becomes excessive. In this manner, by drooping the output voltage in accordance with the output current, the load can be autonomously shared, for example, when a plurality of DC/DC converters is operated in parallel.

In addition, the filter Fil3 that outputs the DC-bus-side current command value I2ref may refer to, for example, the DC bus voltage V2, thereby correcting the DC-bus-side current command value I2ref such that the DC power supply bus 4 is discharged when the DC bus voltage V2 exceeds a predetermined value and the DC power supply bus 4 is charged when the DC bus voltage V2 conversely falls below the predetermined value. In this manner, by adjusting the voltage of the DC power supply bus 4 to a predetermined range, for example, even when a voltage variation of the DC power supply bus 4 occurs at a speed that cannot be sufficiently handled by various command computations of the communication controller 20, the voltage of the DC power supply bus 4 can be adjusted to the predetermined range in a short response time.

Furthermore, the filter Fil4 that outputs the battery-side current command value Ilref may refer to, for example, an upper/lower limit current IB_lim of the storage battery 5 acquired by the storage battery communication unit 27, thereby correcting the battery-side current command value Ilref so as to fall within an upper and lower allowable current range. In particular, lithium-ion batteries and the like often have an internal configuration in which a large number of battery cells are connected in series. In such a case, when a large current flows while the internal resistance of some of the battery cells has increased, the cell voltage rises due to the influence of voltage drop, resulting in an overvoltage condition. Since overvoltage leads to degradation phenomena as described above, preventing such overvoltage by limiting the current is effective for ensuring safety and extending the service life of the storage battery 5.

In the DC/DC converter 2 illustrated in FIG. 3A, portions of the control circuit other than the main circuit (21, 22, 26) described above may be implemented by, for example, internal circuits mounted on a microcontroller or an FPGA. As a specific example, the information acquisition circuit 250 in the communication controller 20 may be implemented by a communication interface circuit compliant with EtherCAT. The control command value generation unit 251 and the user interface 252 may be implemented by, for example, a processor executing a program stored in a memory. The storage battery communication unit 27 may be implemented by a serial communication interface circuit or the like.

The pulse width modulator PWM may be implemented by a dedicated circuit, a timer circuit, or the like. The state monitor 23 may be implemented by an analog-to-digital converter or the like. The charge/discharge control unit 24 and the control command switching unit 25 may be implemented by a processor executing a program stored in a memory. However, the implementation form of the control circuit is not limited to this, and may be hardware, software, or a combination thereof.

### <Overall Operation of Power Systems

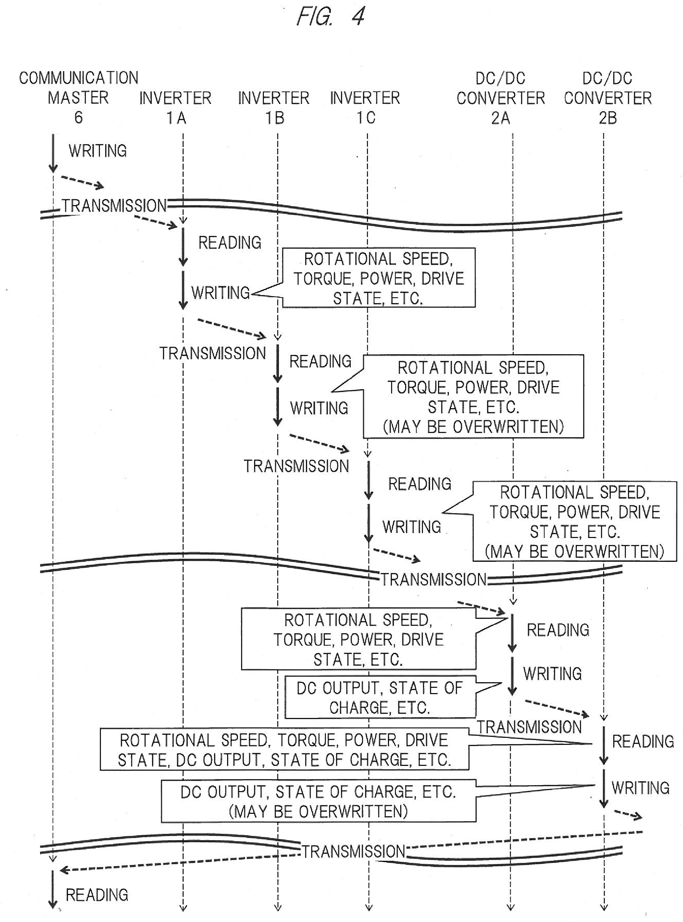

FIG. 4 is a sequence diagram illustrating a schematic operation example of the power system illustrated in FIG. 1. As illustrated in FIG. 4, in a power system in which respective devices are connected in a daisy-chain manner, a group of frames (communication message) transmitted from the communication master 6 reach the DC/DC converter 2A after sequentially passing through the inverters 1A, 1B, and 1C. Then, the communication message reaches the DC/DC converter 2B after passing through the DC/DC converter 2A. Thereafter, the communication message is finally returned to the communication master 6 by loop connection or turnaround connection described with reference to FIG. 1.

Unique station numbers are assigned respectively to the inverters 1A, 1B, and 1C, which are DC devices, and to the DC/DC converters 2A and 2B, which are power converters. Each of the inverters 1A, 1B, and 1C identifies a message frame corresponding to its own station number from the communication message, and performs reading and writing on the message frame in an on-the-fly manner. At this time, information read from the message frame is, for example, control command values from the communication master 6. On the other hand, information written into the message frame is, for example, DC-device-related information representing a rotational speed, torque, electric power, and a drive state of the motor 3.

Each of the DC/DC converters 2A and 2B identifies, from the communication message, a message frame corresponding to its own station number and/or a message frame corresponding to each inverter,- and performs reading and writing on the message frame in an on-the-fly manner. At this time, information read from the message frame is DC-device-related information written by the inverter 1. On the other hand, information written into the message frame is, for example, power conversion operation information such as charge/discharge power when charging and discharging the DC power supply bus 4 based on the DC-device-related information and a state of charge of the storage battery 5.

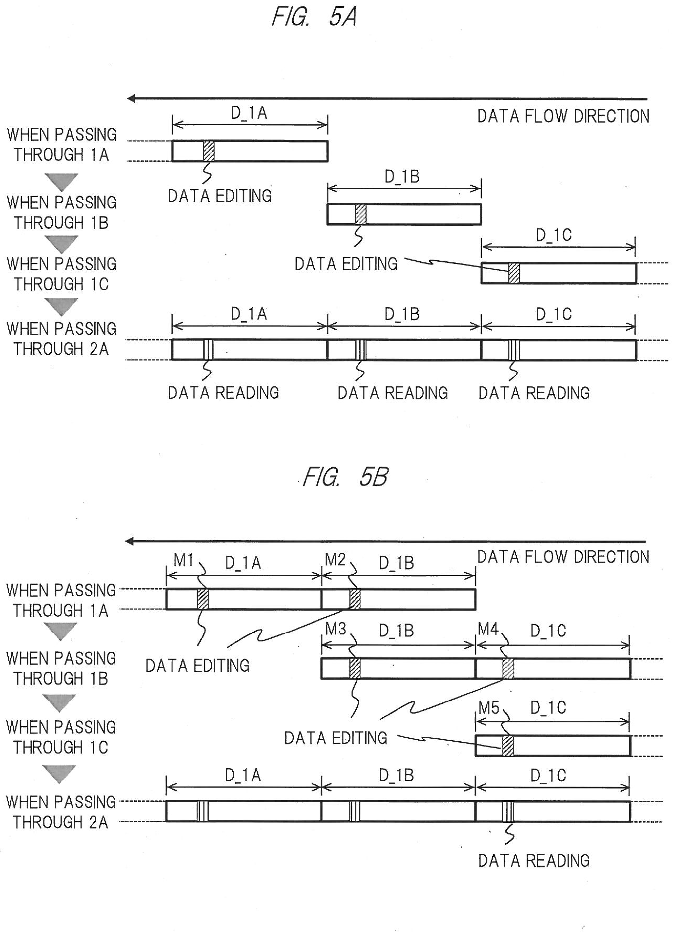

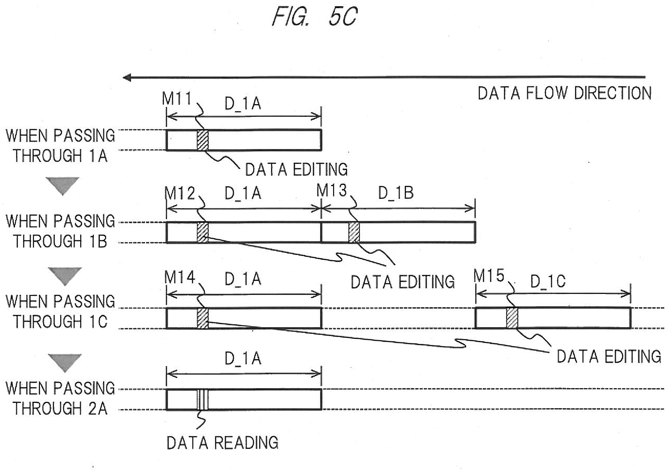

FIG. 5A, FIG. 5B, and FIG. 5C are schematic diagrams each illustrating an example of processing contents using a communication message transmitted in the operation in FIG. 4. In the example illustrated in FIG. 5A, each of the inverters 1A, 1B, and 1C writes messages, that is, DC-device-related information, into predetermined bit positions of message frames D_1A, D_1B, and D_1C assigned thereto, respectively.

In this case, for example, the DC/DC converter 2A can acquire the states of all the inverters by identifying the message frames D_1A, D_1B, and D_1C of each inverter from the received communication message and reading information at predetermined bit positions thereof, that is, DC-device-related information. Note that each of the message frames D_1A, D_1B, and D_1C is one of a plurality of slots constituting a single communication message.

In the example illustrated in FIG. 5B, as in the case of FIG. 5A, each of the inverters 1A, 1B, and 1C writes DC-device-related information into the message frames D_1A, D_1B, and D_1C assigned thereto. In addition, when a message frame assigned to another device, that is, a device to be passed next, is provided following the message frame assigned to the device itself, each of the inverters 1A, 1B, and 1C also writes a message into the message frame assigned to the other device.

In this example, the inverter 1A writes a message M1 into the message frame D_1A, and further writes a message M2 into the message frame D_1B. Similarly, the inverter 1B writes a message M3 into the message frame D_1B, and further writes a message M4 into the message frame D_1C. For example, when calculating an accumulated value of predetermined values relating to the three inverters 1A, 1B, and 1C, if the addition results are sequentially transmitted, the value written into the message frame D_1C of the inverter on the final stage becomes the accumulated value.

As a specific example, the inverter 1A writes a predetermined value relating to itself into the message frames D_1A and D_1B as the messages M1 and M2, respectively. The inverter 1B reads the predetermined value written as the message M2, writes a value obtained by adding a predetermined value relating to itself thereto into the message frame D_1C as the message M4, and writes the predetermined value relating to itself into the message frame D_1B as the message M3. The inverter 1C reads the predetermined value written as the message M4, and writes a value obtained by adding a predetermined value relating to itself thereto into the message frame D_1C as a message M5.

As a result, for example, the DC/DC converter 2A only needs to identify the message frame D_1C provided last among the plurality of message frames D_1A, D_1B, and D_1C included in the communication message, and acquire the message M5 in the identified message frame D_1C as DC-device-related information. In other words, the DC/DC converters 2A and 2B on the latter stage can obtain an accumulated value of all the inverters from the message frame D_1C of the inverter 1C that is passed last, while identifying the message frames D_1A, D_1B, and D_1C of all the inverters and reading information at predetermined bit positions thereof.

In the example illustrated in FIG. 5C, as in the case of FIG. 5A, each of the inverters 1A, 1B, and 1C writes DC-device-related information into the message frames D_1A, D_1B, and D_1C assigned thereto. In addition, each of the inverters 1A, 1B, and 1C writes a message into the message frame D_1A provided first among the plurality of message frames D_1A, D_1B, and D_1C.

As a specific example, the inverter 1A writes a predetermined value relating to itself into the message frame D_1A as a message M11. The inverter 1B reads the predetermined value written as the message M11, writes a value obtained by adding a predetermined value relating to itself thereto into the message frame D_1A as a message M12, and writes the predetermined value relating to itself into the message frame D_1B as a message M13. The inverter 1C reads the predetermined value written as the message M12, writes a value obtained by adding a predetermined value relating to itself thereto into the message frame D_1A as a message M14, and writes the predetermined value relating to itself into the message frame D_1C as a message M15.

As a result, for example, the DC/DC converter 2A only needs to identify the message frame D_1A provided first among the plurality of message frames D_1A, D_1B, and D_1C included in the communication message, and acquire the message M14 in the identified message frame D_1A as DC-device-related information. In other words, the DC/DC converters 2A and 2B on the latter stage can obtain an accumulated value of all the inverters from the message frame D_1A of the inverter 1A that is passed first, while identifying the message frames D_1A, D_1B, and D_1C of all the inverters and reading information at predetermined bit positions thereof.

FIG. 5A, FIG. 5B, and FIG. 5C illustrate examples in which three inverters are provided, but for example, when the number of inverters further increases, the processing load may increase in the method illustrated in FIG. 5A, in which the DC/DC converter 2 individually collects the data of all the inverters and calculates an accumulated value. On the other hand, if the methods illustrated in FIG. 5B and FIG. 5C are employed, in particular, the processing of obtaining an accumulated value, for example, total power, can be omitted from the DC/DC converter 2, and the processing load of the DC/DC converter 2 can be reduced. Also, in association with this, the response speed of the DC/DC converter 2 can be improved.

### <Details of User Interface>

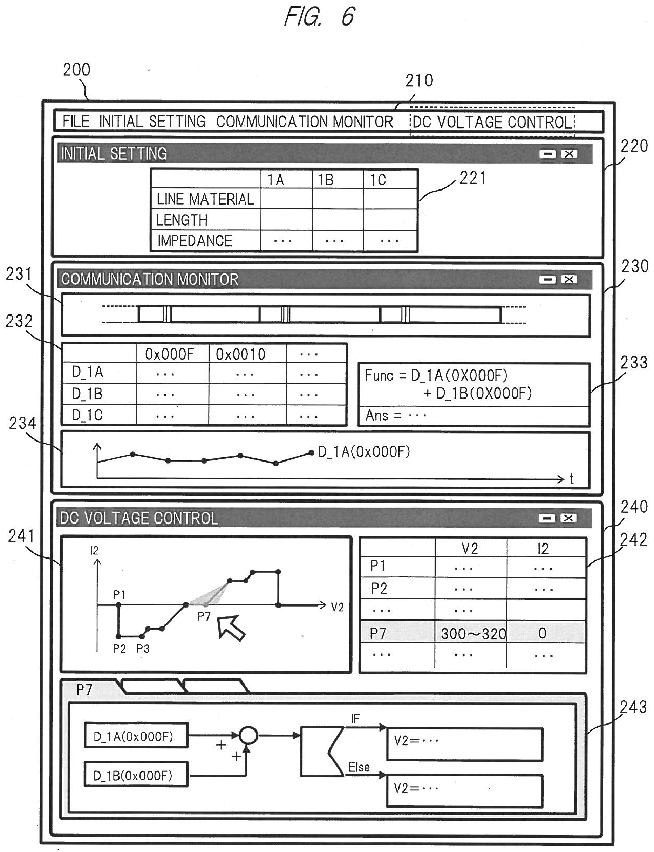

FIG. 6 is a diagram illustrating an example of processing contents of the user interface 252 and an example of display contents in the parameter setting unit 28 in FIG. 3B. The parameter setting unit 28 is implemented by, for example, information processing device such as a PC provided outside the DC/DC converter 2 or a management computer provided inside the DC/DC converter 2. The parameter setting unit 28 includes a display. Also, management software for providing a user with a management function of the DC/DC converter 2 is installed in advance in the parameter setting unit 28.

As one function of such management software, the parameter setting unit 28 displays a parameter setting screen 200 illustrated in FIG. 6 on the display. The user interface 252 in the DC/DC converter 2 acquires various types of parameters input by a user using the parameter setting screen 200 and stores the parameters in a memory. For example, the control command value generation unit 251 can execute processing based on the charge/discharge algorithm while referring to the various types of parameters stored in the memory as necessary.

In FIG. 6, a menu section 210 provided in an uppermost part of the screen is used to call an initial setting section 220, a communication monitor section 230, and a DC voltage control section 240. For example, the initial setting section 220 is constituted of a parameter table 221 that allows input by numerical entry, pull-down menus, or the like. A user inputs, into the parameter table 221, parameters to be initially registered regarding settings of the DC/DC converter 2.

As a specific example, a user inputs, into the parameter table 221, wiring impedance information between the DC/DC converter 2 to be set and each of the inverters 1A, 1B, and 1C, that is, information such as line type, cross-sectional area, length, and impedance. When wiring between the inverter 1 and the DC/DC converter 2 is long in the DC power supply bus 4, a deviation arises between a voltage variation at an end of the inverter 1 and a voltage variation at an end of the DC/DC converter 2 accompanying a load change of the inverter 1, due to a voltage drop caused by power flow through the wiring and wiring impedance.

Therefore, for example, when the voltage at an end of the inverter 1 is controlled using a terminal voltage of the DC/DC converter 2, it is preferable to apply a correction in consideration of the voltage drop to the terminal voltage of the DC/DC converter 2. The parameter table 221 can be used to determine this correction amount. As described above, by registering the wiring impedance information in advance in the parameter table 221 as initial setting and configuring it such that the information can be referred to or reflected in DC voltage control described later, it is possible to obtain an effect of reducing the labor of checking and inputting correction values each time.

The communication monitor section 230 has a function of visualizing information included in Ethernet communication message that has passed through the DC/DC converter 2. In other words, the communication monitor section 230 visualizes the information acquired by the information acquisition circuit 250. In this example, the communication monitor section 230 includes a communication frame display section 231, a communication data display section 232, a simple computation display section 233, a communication data trend display section 234, and the like. The communication frame display section 231 displays a configuration of a message frame to be monitored. The communication data display section 232 numerically displays information written at a predetermined address in each of the message frames D_1A, D_1B, and D_1C, in other words, a predetermined bit position such as "0x000F".

As described above, by configuring the communication data display section 232 in a table format such that information written by a plurality of inverters 1 on the communication path can be compared horizontally or vertically, it is possible to obtain an effect of being able to easily check differences among the inverters. The simple computation display section 233 displays definitions of simple calculation formulas using values at predetermined addresses as arguments and calculation results. Such simple calculation formulas are defined in advance by a user, and accumulated values and the like are calculated in this example. The communication data trend display section 234 displays, in a time-series trend, a value written at an identified address "0x000F" in an identified message frame D_1A,

The DC voltage control section 240 is, for example, a screen used when a user manually defines the charge/discharge algorithm in the control command value generation unit 251. The DC voltage control section 240 includes a bus-side correlation display section 241, a correlation node numerical display section 242, a charge/discharge algorithm setting section 243, and the like. For example, a case of having the DC/DC converter 2 perform an operation of adjusting a charge/discharge amount of the DC power supply bus 4 based on the DC bus voltage V2 is assumed. In this case, a user defines correlation information that determines a relationship between the DC bus voltage V2 and the charge/discharge amount of the DC power supply bus 4, which is the DC bus current I2 in this example, by using the bus-side correlation display section 241 and the correlation node numerical display section 242.

The bus-side correlation display section 241 two-dimensionally displays the correlation information defined by the correlation node numerical display section 242. That is, a user defines coordinate values of respective nodes P1, P2, ... included in the two-dimensionally displayed correlation information by using the correlation node numerical display section 242. The control command value generation unit 251 charges and discharges the DC power supply bus 4 based on the correlation information.

For example, a case in which the DC bus voltage V2 and the DC bus current I2 at a node P3 are "V2_P3" and "I2_P3", respectively is assumed. In this case, when "V2_P3" is detected as the DC bus voltage V2 in FIG. 3A, the control command value generation unit 251 generates a DC-bus-side current command value I2* such that the DC power supply bus 4 is charged with "I2_P3."

Furthermore, the correlation information is configured to be changeable based on the DC-device-related information from the inverter 1. For example, when coordinate values of a node P7 are changed based on the DC-device-related information, a user programs the change contents by using the charge/discharge algorithm setting section 243. In this example, the DC bus voltage V2 at the node P7 is set to be changed based on the DC-device-related information written at an address "0x000F" in the message frames D_1A and D_1B. In this case, a timing for switching between charging and discharging is adjusted.

As described above, with the configuration in which the correlation information can be changed based on DC-device-related information, the DC/DC converter 2 can autonomously optimize charging and discharging of the DC power supply bus 4 in accordance with the state of the inverter 1. Note that, when changing the DC bus voltage V2 at the node P7 in this manner, the user interface 252 may calculate a value of the DC bus voltage V2 after the change by reflecting wiring impedance information set in the initial setting section 220. In this manner, higher-accuracy control can be achieved.

### <Details of Control Command Value Generation Unit>

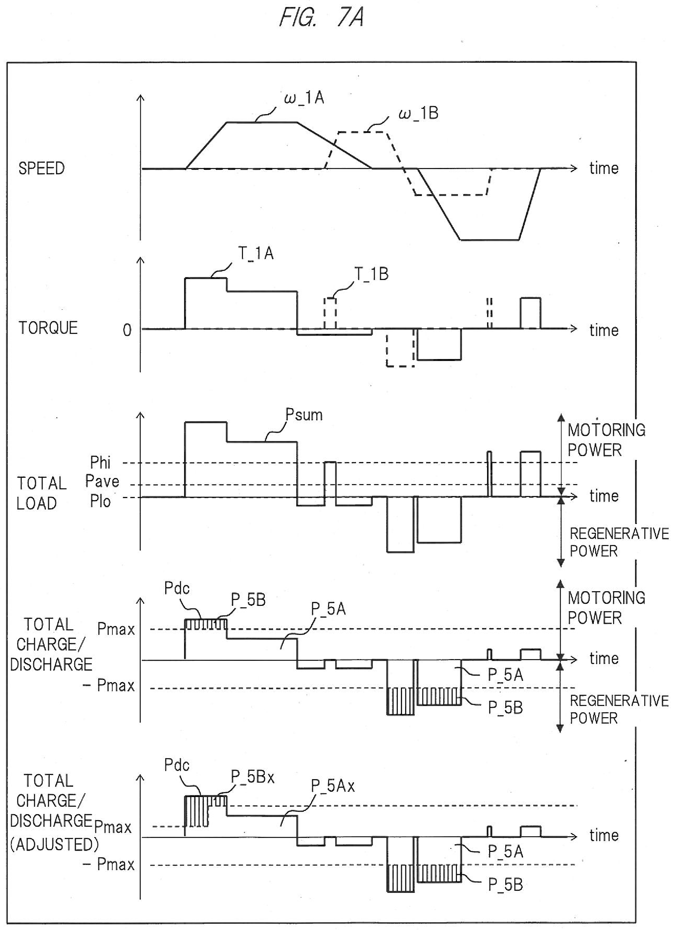

An example in which the control command value generation unit 251 operates based on the charge/discharge algorithm defined by a user has been described in FIG. 6, but an example in which it operates based on a charge/discharge algorithm defined in advance by a program or the like will be described here. FIG. 7A is a diagram for schematically describing an operation example based on a charge/discharge algorithm assuming inverter operation patterns in the control command value generation unit 251 illustrated in FIG. 3B. In FIG. 7A, the inverter 1C is omitted and operation patterns of the inverters 1A and 1B are illustrated in order to simplify the description.

Each of the inverters 1A and 1B receives a speed command value from the communication master 6 so as to operate under speed control, and rotationally drives the motors 3A and 3B at speeds ω_1A and ω_2 based on the speed command value. Along with this, torques of the motors 3A and 3B vary like T_1A and T_1B, respectively, depending on load conditions. At this time, a total of motoring power supplied from the DC power supply bus 4 to both inverters 1 and regenerative power flowing in an opposite direction is partially cancelled, and varies like a total load power Psum that is substantially proportional to a sum of the torques.

The DC-device-related information of each inverter 1 such as speed, torque, and motoring/regenerative power is transmitted to the DC/DC converter 2 via the communication message. The communication controller 20 in the DC/DC converter 2, more specifically, the control command value generation unit 251, generates control command values based on the DC-device-related information so as to charge the DC power supply bus 4 using motoring power from the storage battery 5 or to charge the storage battery 5 using regenerative power from the DC power supply bus 4.

For example, the control command value generation unit 251 may set thresholds such as a motoring threshold Phi and a regenerative threshold Plo with respect to the total load power Psum in advance, and may charge or discharge electric power corresponding to an amount exceeding the thresholds when motoring power or regenerative power exceeding the thresholds is generated. In FIG. 7A, the electric power exceeding the thresholds is illustrated as a total charge/discharge power Pdc. The motoring threshold Phi and the regenerative threshold Plo are set in advance based on, for example, a capability of the AC/DC converter 41 in FIG. 1.

Furthermore, by setting a threshold Pmax with respect to the total charge/discharge power Pdc in advance, for example, an operation in which the DC/DC converter 2A handles a charge/discharge power P_5A within the threshold Pmax and the DC/DC converter 2B handles a charge/discharge power P_5B exceeding the threshold becomes possible. As methods for performing such an operation, for example, a method in which the threshold Pmax is set by the parameter setting unit 28 and a method in which the threshold Pmax is shared between the DC/DC converters 2A and 2B via the communication message may be employed.

Alternatively, the upstream DC/DC converter 2A may write the charge/discharge power P_5A handled by itself into a communication message, thereby making the downstream DC/DC converter 2B comprehend a remaining charge/discharge power P_5B required to obtain the total charge/discharge power Pdc. Alternatively, the upstream DC/DC converter 2A may update the DC-device-related information included in the communication message by reflecting the charge/discharge power P_5A handled by itself.

Specifically, each inverter 1 writes the total load power Psum, which is one of items of the DC-device-related information, into the communication message by using, for example, a method of calculating an accumulated value illustrated in FIG. 5B or FIG. 5C. The upstream DC/DC converter 2A acquires the total load power Psum, and updates the total load power Psum, that is, the DC-device-related information, by subtracting the charge/discharge power P_5A handled by itself from the total load power Psum. In other words, the DC/DC converter 2A updates, for example, the message M5 in FIG. 5B or the message M14 in FIG. 5C.

Then, the downstream DC/DC converter 2B charges or discharges the DC power supply bus 4 based on the DC-device-related information updated by the upstream DC/DC converter 2A, that is, the information representing the charge/discharge power P_5B. When such a method is employed, each of the DC/DC converters 2A and 2B can read a message at a predetermined position and charge or discharge the DC power supply bus 4 by directly using the information written in the message. As a result, the processing performed by the DC/DC converters 2A and 2B can be simplified.

Note that the DC/DC converters 2A and 2B can confirm whether there is an imbalance between the states of charge (SOC) of the DC/DC converters 2 by acquiring states of charge of the storage batteries 5A and 5B using the storage battery communication unit 27 illustrated in FIG. 3A, and writing them into the communication message. In this case, as illustrated in FIG. 7A, for example, by temporarily changing the threshold Pmax of the DC/DC converter 2A, the powers handled by the DC/DC converters 2A and 2B can be changed to charge/discharge powers P_5Ax and P_5Bx. As a result, mutual adjustment of the states of charge can be achieved.

When such adjustment of states of charge is performed, the power handled by the upstream DC/DC converter 2A determines the charge/discharge margin of the downstream DC/DC converter 2B, so that the DC/DC converter 2 with a higher degree of freedom is preferably arranged on the upstream side. More specifically, it is preferable that the plurality of DC/DC inverters 2 is connected in series via the Ethernet line 7 in a descending order of the power capacity [W] of the converter conversion circuits 21 included in the respective DC/DC converters 2. In this manner, sufficient margin for the adjustment of state of charge on the downstream side can be secured.

Also, as illustrated in FIG. 7A, when the upstream DC/DC converter 2A determines its own charge/discharge power based on the threshold Pmax, the upstream DC/DC converter 2A tends to perform charge/discharge switching more frequently than the downstream DC/DC converter 2B. On the other hand, in the storage battery 5, due to its internal structure, a trade-off relationship may exist between tolerance to high-speed charge/discharge switching and a large battery capacity [Ah]. As a specific example, when electrodes are designed to be thicker, the battery capacity increases, but ion diffusion inside the battery is hindered, so that disadvantages arise such as degraded impedance characteristics or accelerated deterioration due to localized ion depletion.

In addition, as another specific example, it is known that capacitors are suitable for high-frequency charging and discharging because the transfer of charges therein is smoother than that in the storage battery 5. Accordingly, in a system in which various types of storage batteries 5 are used in combination, the plurality of DC/DC converters 2 is preferably connected in series via the Ethernet line 7 in a descending order of the charging and discharging performance indices of the respective storage devices connected to the DC/DC converters 2. In other words, it is preferable that the storage battery 5 having higher tolerance to frequent charging and discharging is arranged on the upstream side. As a result, for example, the service life of the overall storage device can be extended.

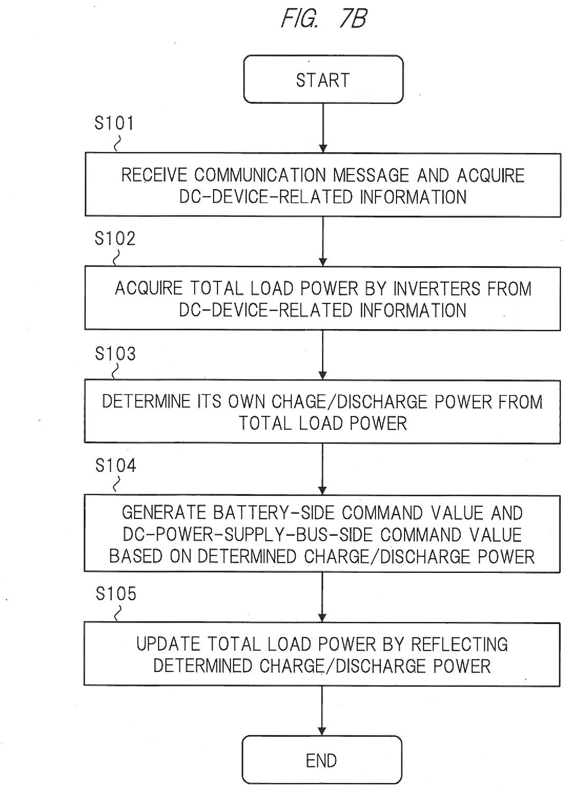

FIG. 7B is a flowchart illustrating an example of main processing contents performed in FIG. 7A by the communication controller 20 illustrated in FIG. 3B. In FIG. 7B, the information acquisition circuit 250 receives the communication message transmitted via the inverter 1 and acquires the DC-device-related information from the communication message (step S101). Subsequently, the control command value generation unit 251 acquires the total load power Psum generated by the inverters 1 from the DC-device-related information (step S102). In this case, the inverters 1 may directly write the total load power Psum or the control command value generation unit 251 may calculate the total load power Psum based on the speed and torque written by the inverters 1.

Next, the control command value generation unit 251 determines the charge/discharge power to be handled by itself from the total load power Psum as illustrated in FIG. 7A (step S103). Then, based on the determined charge/discharge power, the control command value generation unit 251 generates the control command values (V1* and I1*) on the side of the battery or the control command values (V2* and I2*) on the side of the DC power supply bus 4 (step S104).

As a specific example, when charging the DC power supply bus 4, the control command value generation unit 251 generates the control command values (V2* and I2*) on the side of the DC power supply bus 4 corresponding to required motoring power, and causes the converter conversion circuit 21 to perform a step-up operation. In this case, the control command value generation unit 251 may correct the control command values based on, for example, the parameter table 221 illustrated in FIG. 6 in which the wiring impedance information is defined. On the other hand, when discharging the DC power supply bus 4, that is, charging the storage battery 5, the control command value generation unit 251 generates the control command values (V1* and I1*) on the side of the battery corresponding to regenerative power, and causes the converter conversion circuit 21 to perform a step-down operation.

Here, the case of discharging the DC power supply bus 4 refers to the case in which generation of regenerative power in at least one of the plurality of inverters 1 is detected based on the DC-device-related information. More specifically, for example, since motoring power and regenerative power may be canceled among the plurality of motors 3, the case of discharging the DC power supply bus 4 refers to the case in which generation of regenerative power is detected in the overall inverters 1, as indicated by the total load power Psum illustrated in FIG. 7A. By detecting the power regeneration and charging the storage battery 5 with the regenerative power, electric power can be reused, thereby contributing to energy saving.

Thereafter, the control command value generation unit 251 updates the DC-device-related information written into the communication message, that is, the information of the total load power Psum in this example, by reflecting the charge/discharge power determined in step S103 (step S105). In this manner, the control command value generation unit 251 in the DC/DC converter 2 provided on the next stage can charge or discharge the DC power supply bus 4 based on the updated DC-device-related information.

Note that the processing of the control command value generation unit 251 in FIG. 7B is implemented by, for example, a processor executing a program stored in a memory and defining a charge/discharge algorithm. However, the implementation form is not limited to this, and for example, a control command value generation circuit that executes the processing may be mounted on an FPGA or an ASIC.

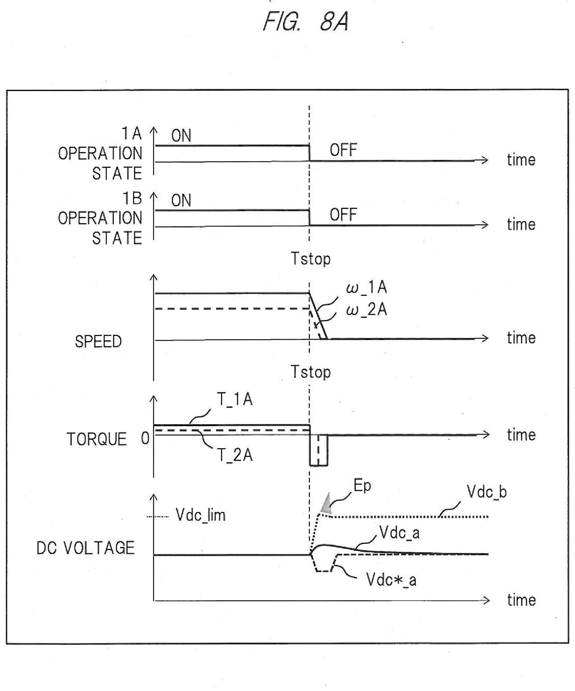

FIG. 8A is a diagram for schematically describing another operation example based on a charge/discharge algorithm assuming inverter operation patterns in the control command value generation unit 251 illustrated in FIG. 3B. In this example, the inverters 1A and 1B are simultaneously brought to an emergency stop at time Tstop for safety reasons of the electromechanical system. At this time, since the regenerative power associated with the deceleration of the motors 3A and 3B becomes steep, the voltage of the DC power supply bus 4 may reach an overvoltage Vdc_lim as indicated by voltage Vdc_b.

Such an overvoltage is normally protected against by dissipating the regenerative power as heat by a separately provided resistor or the like. However, it is desirable that the regenerative power is stored in a reusable state as much as possible from the viewpoint of energy saving. Therefore, the DC/DC converter 2 monitors the operation states of the inverters 1A and 1B based on the DC-device-related information in the communication message. Then, when both the inverters 1A and 1B transition from ON to OFF simultaneously, the DC/DC converter 2 shifts to a preset faster discharge operation, thereby guiding the voltage of the DC power supply bus 4 to be reduced rapidly.

In this manner, as indicated by voltage Vdc_a, the occurrence of overvoltage is suppressed, and storage of regenerative power is promoted. Here, the faster discharge operation may be, for example, an operation in which, in the charge/discharge control unit 24 illustrated in FIG. 3A, the control command switching unit 25 is switched to control of the battery current I1, and the corresponding command value I1* is set to a maximum current applicable to charging of the storage battery 5. Alternatively, as indicated by voltage command value Vdc*_a, the operation may be such that the DC-bus-side voltage command value V2* for the DC power supply bus 4 is rapidly decreased.

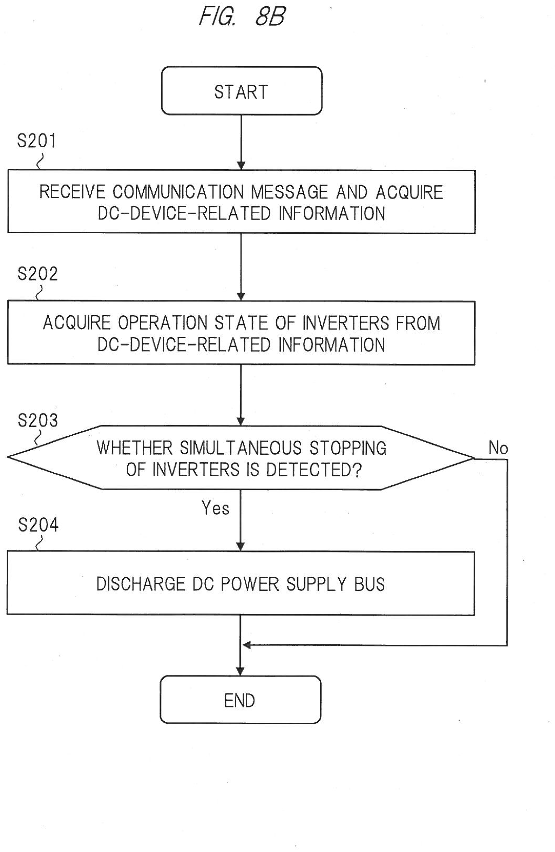

FIG. 8B is a flowchart illustrating an example of main processing contents performed in FIG. 8A by the communication controller 20 illustrated in FIG. 3B. In FIG. 8B, the information acquisition circuit 250 receives the communication message transmitted via the inverter 1 and acquires the DC-device-related information from the communication message (step S201). Subsequently, the control command value generation unit 251 acquires the operation state of the inverter 1 from the DC-device-related information (step S202) . For example, the inverter 1 writes, as the DC-device-related information, a fact that an emergency stop button is pressed by a user or that an emergency stop signal is asserted by an internal protection function, into the communication message.

When simultaneous stopping of the plurality of inverters 1 is detected based on the acquired operation state (step S203: Yes), the control command value generation unit 251 discharges the DC power supply bus 4 (step S204). More specifically, the control command value generation unit 251 rapidly discharges the DC power supply bus 4 and rapidly charges the storage battery 5. In this manner, it is possible to contribute to energy saving by reusing the electric power while protecting the DC power supply bus 4 from overvoltage. Note that the implementation form of the control command value generation unit 251 is the same as that in the case of FIG. 7B.

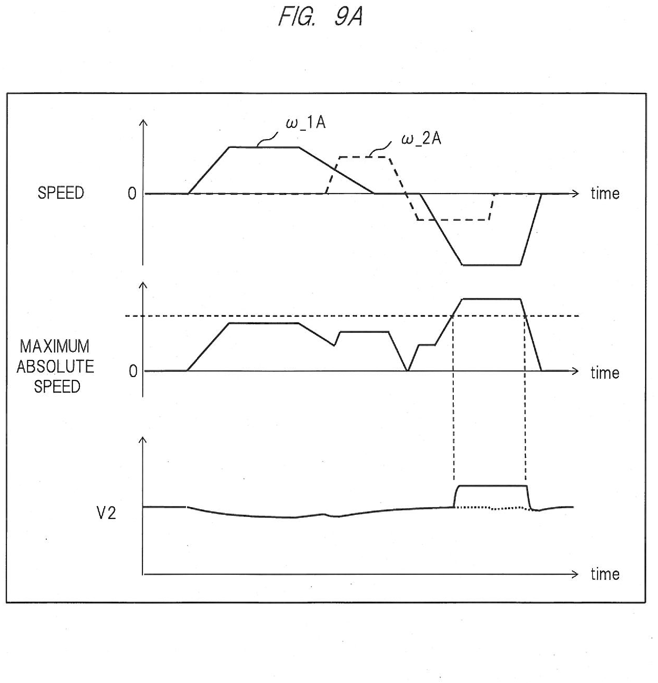

FIG. 9A is a diagram for schematically describing still another operation example based on a charge/discharge algorithm assuming inverter operation patterns in the control command value generation unit 251 illustrated in FIG. 3B. For example, in a permanent magnet motor, it is known that a back electromotive force is induced in a field circuit during operation and the induced voltage increases particularly as the rotational speed becomes higher. As the induced voltage increases, the voltage difference between the induced voltage and the AC voltage that the inverter 1 can output decreases, so the current that can be supplied to the field winding decreases and the torque is limited at high rotational speeds.

In such a case, as illustrated in FIG. 9A, by temporarily increasing the DC bus voltage V2 supplied to the inverter 1 to boost the AC voltage output from the inverter 1, a sufficient voltage difference can be ensured, and the torque can be maintained. More specifically, when detecting that the rotational speed of some motors 3 has reached a threshold on a high rotational speed side and the motoring torque is in a limited state based on the DC-device-related information from the inverter 1, the DC/DC converter 2 may increase the DC bus voltage V2 by charging the DC power supply bus 4.

As a specific control method in this case, for example, in the charge/discharge control unit 24 illustrated in FIG. 3A, the control command switching unit 25 may be switched to control of the DC bus voltage V2, and the corresponding command value V2* may be temporarily increased, thereby increasing the DC bus voltage V2 as illustrated in FIG. 9A. As a result, advantages such as avoiding structural modifications of the motor 3, for example, increasing the diameter of electric wires can be obtained.

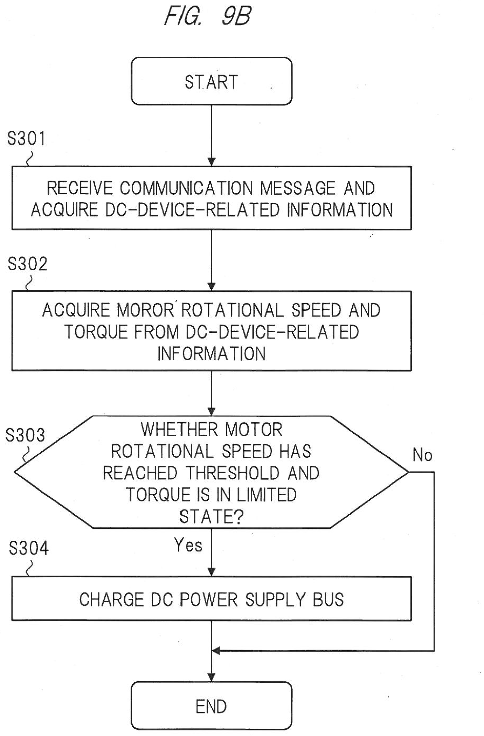

FIG. 9B is a flowchart illustrating an example of main processing contents performed in FIG. 9A by the communication controller 20 illustrated in FIG. 3B. In FIG. 9B, the information acquisition circuit 250 receives the communication message transmitted via the inverter 1 and acquires the DC-device-related information from the communication message (step S301). Subsequently, the control command value generation unit 251 acquires the rotational speed and torque of the motor 3 from the DC-device-related information (step S302).

Then, when the control command value generation unit 251 detects that the acquired motor rotational speed has reached a preset threshold on a high rotational speed side and the torque is in a limited state (step S303: Yes), the control command value generation unit 251 charges the DC power supply bus 4 (step S304) . More specifically, the control command value generation unit 251 charges the DC power supply bus 4 so as to increase the DC bus voltage V2. Note that whether or not the torque is in the limited state can be determined by, for example, whether the torque has reached a maximum torque defined based on the threshold of motor rotational speed. Also, the implementation form of the control command value generation unit 251 is the same as that in the case of FIG. 7B.

### <Main Effects of First Embodiment>

As described above, when the power system according to the first embodiment is used, the power converter can receive the communication message including the DC-device-related information via the Ethernet line, and can charge and discharge the DC power supply bus based on the DC-device-related information acquired from the communication message. Therefore, representatively, when the system configuration of the power system is changed, modification of a power management device such as that required in a centralized management method is not necessary, and it is possible to readily cope with such change in system configuration.

### (Second Embodiment)

### <Configuration of Power System>

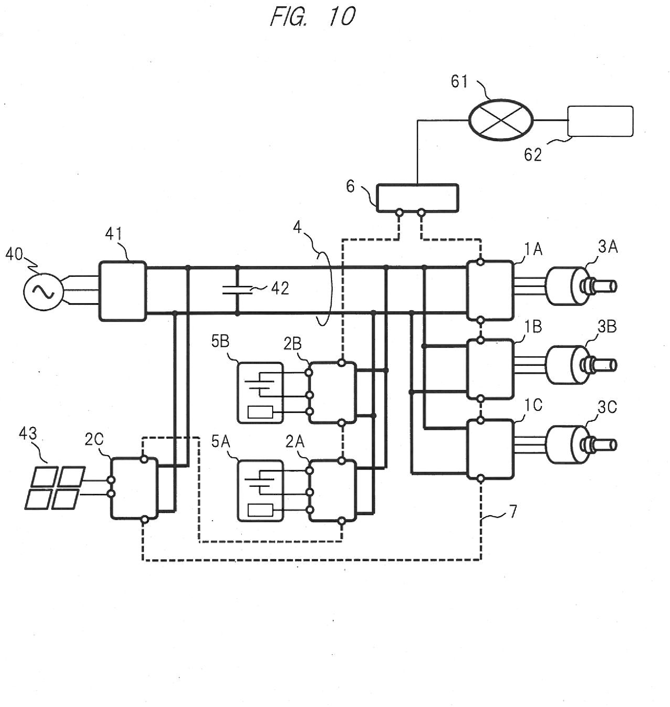

FIG. 10 is a schematic diagram illustrating a configuration example of a power system according to the second embodiment. The power system illustrated in FIG. 10 further includes a DC/DC converter 2C and a solar power generation panel 43 relative to the power system illustrated in FIG. 1. One end of the DC/DC converter 2C is connected to the solar power generation panel 43 instead of a storage battery, and the other end thereof is connected to the DC power supply bus 4.

The DC/DC converter 2C is connected so as to be inserted in series between the group of inverters 1 and the DC/DC converter 2A on the Ethernet line 7. Unlike the DC/DC converters 2A and 2B in FIG. 1, the DC/DC converter 2C performs only unidirectional power generation operation, rather than bidirectional charging and discharging. However, since such a power generation operation can be regarded as a charging operation of the DC power supply bus 4, operations similar to those of the storage battery 5 described in the first embodiment can be applied to the DC/DC converter 2C.

### <Main Effects of Second Embodiment>

As described above, by using the power system according to the second embodiment, effects similar to those described in the first embodiment can be obtained. In addition, renewable energy generated by solar power generation can be effectively utilized to drive the motors 3 and the like, thereby contributing to energy saving and measures against global warming.

Although the invention made by the present inventors has been specifically described based on the embodiments, the present invention is not limited to the above embodiments, and various modifications can be made without departing from the gist of the present invention. For example, the above-described embodiments have been described in detail so as to make the present invention easily understood, and are not necessarily limited to those having all the described configurations. A part of the configuration of one embodiment can be replaced with the configuration of another embodiment, and the configuration of another embodiment can be added to the configuration of one embodiment. In addition, it is possible to add, delete, and replace other configurations for a part of the configuration of each embodiment.

### REFERENCE SIGNS LIST

1: inverter (DC device), 2: DC/DC converter (power converter), 3: motor, 4: DC power supply bus, 5: storage battery, 6: communication master (supervisory control device), 7: Ethernet line, 20: communication controller, 21: converter conversion circuit, 28: parameter setting unit, 220: initial setting section, 240: DC voltage control section, 241: bus-side correlation display section, 243: charge/discharge algorithm setting section, 250: information acquisition circuit, 251: control command value generation unit, 252: user interface, D_1A, D_1B, D_1C: message frame

## Claims

1. A power system comprising:
a plurality of DC devices;
a DC power supply bus configured to supply power to each of the plurality of DC devices;
a power converter capable of charging and discharging power to and from the DC power supply bus;
a supervisory control device configured to control the plurality of DC devices; and
an Ethernet line configured to connect the plurality of DC devices, the power converter, and the supervisory control device,
wherein the power converter includes an information acquisition circuit configured to receive, via the Ethernet line, a communication message including DC-device-related information that is information relating to at least one of the plurality of DC devices, and acquire the DC-device-related information, and the power converter charges and discharges the DC power supply bus based on the acquired DC-device-related information.

2. The power system according to claim 1,
wherein the Ethernet line is connected in series such that the communication message is transmitted to the power converter after sequentially passing through the plurality of DC devices, and
wherein the DC-device-related information is written into the communication message by at least one of the plurality of DC devices.

3. The power system according to claim 2,
wherein unique station numbers are assigned respectively to the plurality of DC devices,
wherein each of the plurality of DC devices identifies, from the communication message, a plurality of message frames respectively corresponding to the plurality of station numbers, and when a message frame corresponding to the station number of another device is provided following a message frame corresponding to the station number of the device itself, writes a message into the message frame corresponding to the station number of the other device, and
wherein the information acquisition circuit in the power converter identifies a message frame provided last from among the plurality of message frames included in the communication message, and acquires a message in the identified message frame as the DC-device-related information.

4. The power system according to claim 2,
wherein unique station numbers are assigned respectively to the plurality of DC devices,
wherein each of the plurality of DC devices identifies, from the communication message, a plurality of message frames respectively corresponding to the plurality of station numbers, and writes a message into a message frame provided first among the plurality of message frames regardless of the station numbers, and
wherein the information acquisition circuit in the power converter identifies the message frame provided first from among the plurality of message frames included in the communication message, and acquires the message in the identified message frame as the DC-device-related information.

5. The power system according to claim 2,
wherein the power converter comprises a plurality of power converters,
wherein the plurality of power converters is connected by the Ethernet line,
wherein one of the plurality of power converters updates the DC-device-related information included in the communication message by reflecting charge/discharge power handled by the power converter itself when charging and discharging the DC power supply bus, and
wherein another one of the plurality of power converters charges and discharges the DC power supply bus based on the updated DC-device-related information.

6. The power system according to claim 2,
wherein the power converter comprises a plurality of power converters,
wherein each of the plurality of power converters includes a power conversion circuit including switching elements for charging and discharging, and
wherein the plurality of power converters is connected in series via the Ethernet line in a descending order of power capacity of the converter conversion circuits included in the respective power converters.

7. The power system according to claim 2,
wherein the power converter comprises a plurality of power converters,
wherein each of the plurality of power converters includes a DC/DC converter configured to charge and discharge power of the DC power supply bus to and from a storage device, and
wherein the plurality of power converters is connected in series via the Ethernet line in a descending order of charging and discharging performance indices of the storage devices connected to the respective power converters.

8. The power system according to claim 1 or 2,
wherein the power converter discharges the DC power supply bus when generation of regenerative power in at least one of the plurality of DC devices is detected based on the DC-device-related information.

9. The power system according to claim 1 or 2,
wherein the power converter discharges the DC power supply bus when generation of regenerative power in the overall DC devices is detected based on the DC-device-related information.

10. The power system according to claim 1 or 2,
wherein the power converter discharges the DC power supply bus when simultaneous stopping of the plurality of DC devices is detected based on the DC-device-related information.

11. The power system according to claim 1 or 2,
wherein at least one of the plurality of DC devices is an inverter configured to drive a motor, and
wherein the power converter charges the DC power supply bus when detecting that a rotational speed of the motor has reached a threshold and a torque is in a limited state based on the DC-device-related information.

12. A power converter electrically connected in parallel with a plurality of DC devices via a DC power supply bus, the power converter comprising an information acquisition circuit configured to receive a communication message transmitted via an Ethernet line and acquire DC-device-related information written by at least one of the plurality of DC devices from the communication message, and
the power converter charging and discharging the DC power supply bus based on the DC-device-related information acquired by the information acquisition circuit.

13. The power converter according to claim 12, the power converter updating the DC-device-related information included in the communication message by reflecting charge/discharge power handled by itself when charging and discharging the DC power supply bus.

14. The power converter according to claim 12, the power converter holding correlation information that determines a relationship between a voltage of the DC power supply bus and a charge/discharge amount of the DC power supply bus,
the power converter charging and discharging the DC power supply bus based on the correlation information, and
the power converter changing the correlation information based on the DC-device-related information.

15. The power converter according to claim 14, the power converter holding a parameter which a user can set,
the parameter including wiring impedance information between the power converter and each of the plurality of DC devices, and
the power converter further changing the correlation information based on the wiring impedance information.
